# DEMANDE DE BREVET EUROPEEN

(11) **EP 4 813 868 A1**
(43) Date de publication de la demande: **30.09.2026**
(21) Numéro de dépôt: 26166640.8
(22) Date de dépôt: 23.03.2026
(51) Int. Cl.: B65F 1/06, B65F 1/12, B65F 1/14, B65F 1/16, B60N 3/08

(54) **CONTENEUR DE DÉCHETS ET VÉHICULE COMPRENANT UN TEL CONTENEUR DE DÉCHETS**

(30) Priorité: 25.03.2025 FR 2503065
(71) Demandeur: SpeedInnov, 75008 Paris (FR)
(72) Inventeur: VICTOIRE, Rémi, 17140 LAGORD (FR); MARQUETEAU, Eric, 17000 LA ROCHELLE (FR); JEUNEHOMME, Sylvie, 17220 SALLES SUR MER (FR); HUART, Johan, 59990 PRESEAU (FR); FRESNO, Sylvain, 17000 LA ROCHELLE (FR); FEGER, Etienne, 72530 YVRÉ L'EVÊQUE (FR); ROUGIER, Priscille, 67730 CHATENOIS (FR); GONDEL, Damien, 59570 GUSSIGNIES (FR)
(74) Mandataire: Plasseraud IP

(57) **Abrégé**

Cette invention concerne un conteneur de déchets (4) configuré pour être actionné entre un état de service dans lequel le conteneur de déchets (4) est configuré pour recevoir des déchets, et un état de maintenance permettant d'enlever les déchets reçus par le conteneur de déchets (4), le conteneur de déchets (4) comprenant :
- un réceptacle (8) et un élément de paroi (6) définissant ensemble un espace intérieur (12) lorsque le conteneur de déchets (4) est dans l'état de service ;
- un bac (10) configuré pour être agencé dans l'espace intérieur (12),
le réceptacle (8) étant mobile en rotation autour d'un premier axe (14) selon un angle égal à un premier angle de rotation entre l'état de service et l'état de maintenance, le bac (10) étant mobile en rotation autour d'un deuxième axe (18) selon un angle égal à un deuxième angle de rotation.

## Description

La présente invention concerne un conteneur de déchets configuré pour être actionné entre un état de service dans lequel le conteneur de déchets est configuré pour recevoir des déchets, et un état de maintenance permettant d'enlever les déchets reçus par le conteneur.

La présente invention concerne aussi un véhicule ferroviaire comprenant un tel conteneur de déchets.

Des conteneurs de déchets dans les véhicules ferroviaires sont connus. Ils comprennent par exemple un bac pour la réception de déchets. Le bac est par exemple fixé à une paroi du véhicule ferroviaire. Pour enlever les déchets, le bac est par exemple détaché de la paroi du véhicule ferroviaire et les déchets sont alors versés dans un autre conteneur.

Certains conteneurs de déchets comprennent un sac pour recevoir les déchets, par exemple agencé dans le bac. Dans ce cas, pour enlever les déchets, le sac est par exemple soulevé à partir du bac.

Néanmoins, lorsque le poids des déchets est élevé, l'enlèvement des déchets peut s'avérer difficile. En outre, l'espace disponible dans le véhicule ferroviaire étant limité, il n'est pas toujours aisé pour les agents de manipuler les conteneurs de déchets.

Ainsi, un but de l'invention est de proposer un conteneur de déchets plus ergonomique, notamment lors de l'enlèvement des déchets.

Pour cela, la présente description porte sur un conteneur de déchets configuré pour être actionné entre un état de service dans lequel le conteneur de déchets est configuré pour recevoir des déchets, et un état de maintenance permettant d'enlever les déchets reçus par le conteneur de déchets, le conteneur de déchets comprenant :
- un réceptacle et un élément de paroi définissant ensemble un espace intérieur lorsque le conteneur de déchets est dans l'état de service ;
- un bac configuré pour être agencé dans l'espace intérieur,

le réceptacle étant mobile en rotation autour d'un premier axe selon un angle égal à un premier angle de rotation entre l'état de service et l'état de maintenance,
le bac étant mobile en rotation autour d'un deuxième axe selon un angle égal à un deuxième angle de rotation entre l'état de service et l'état de maintenance, le deuxième angle de rotation étant différent du premier angle de rotation, le premier axe étant de préférence parallèle au deuxième axe.

Suivant des mises en œuvre particulières, le conteneur de déchets comprend une ou plusieurs des caractéristiques suivantes, prise(s) isolément ou suivant toutes les combinaisons techniquement possibles :
- le conteneur de déchets comprend au moins une charnière connectant l'élément de paroi au réceptacle, la charnière ayant un axe définissant le premier axe.
- l'élément de paroi s'étend selon une première direction, dite verticale, et selon une deuxième direction perpendiculaire à la première direction, dite transversale ou longitudinale, une extrémité inférieure du réceptacle étant dans l'état de maintenance en dessous selon la direction verticale de la même extrémité inférieure dans l'état de service.
- le réceptacle comprend un couvercle configuré pour tourner autour d'un troisième axe entre une position ouverte et une position fermée, le réceptacle présentant une ouverture pour la réception des déchets, le couvercle étant configuré pour obturer l'ouverture dans la position fermée, le troisième axe étant de préférence parallèle au premier et/ou deuxième axe.
- le bac présente une ouverture, l'ouverture du bac étant plus grande que l'ouverture du réceptacle.
- le conteneur de déchets comprend un sac inséré au moins partiellement dans le bac.
- le conteneur de déchets comprend en outre un dispositif de maintien configuré pour exercer, dans l'état de service, une force sur le bac selon une direction perpendiculaire au premier axe, le dispositif de maintien étant de préférence configuré pour exercer la force sur le bac par l'intermédiaire d'une partie du sac).
- le conteneur de déchets comprend un dispositif de limitation configuré pour limiter la rotation du bac entre l'état de service et l'état de maintenance une fois que le deuxième angle de rotation est atteint.
- le dispositif de limitation comprend un pion fixé au bac et une plaque présentant une rainure, le pion étant configuré pour se déplacer dans la rainure lorsque le bac tourne autour du deuxième axe.

Selon un aspect, l'élément de paroi est une portion de surface externe de la paroi.

Selon un aspect, le réceptacle est agencé en porte à faux par rapport à la paroi, par exemple par rapport à l'élément de paroi.

Selon un aspect, le réceptacle et le bac sont sensiblement alignés dans l'état de service.

Selon un aspect, le réceptacle et/ou le bac sont orientés sensiblement verticalement dans l'état de service.

La présente description se rapporte également à un véhicule comprenant un conteneur de déchets tel que décrit ci-dessus.

D'autres caractéristiques et avantages de l'invention apparaîtront à la lecture de la description qui suit d'implémentations de l'invention, données à titre d'exemple uniquement et en référence aux dessins qui sont :
- la figure 1, une représentation schématique en perspective, avec une coupe partielle, d'une partie d'un véhicule ferroviaire comprenant un conteneur de déchets selon l'invention ;
- la figure 2, une représentation schématique en coupe de la partie du véhicule ferroviaire comprenant le conteneur de déchets de la figure 1 ;
- la figure 3, une représentation schématique en perspective, avec une coupe partielle, d'une partie du conteneur de déchets de la figure 1 comprenant un système de verrouillage, et
- la figure 4, une représentation schématique en coupe d'une partie du conteneur de déchets de la figure 3.

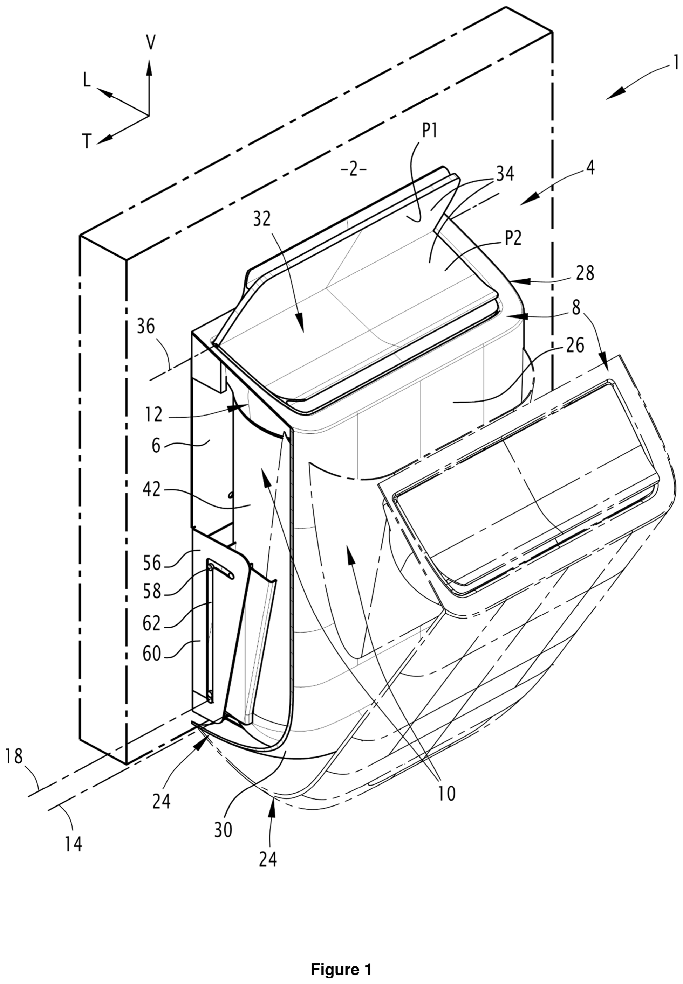

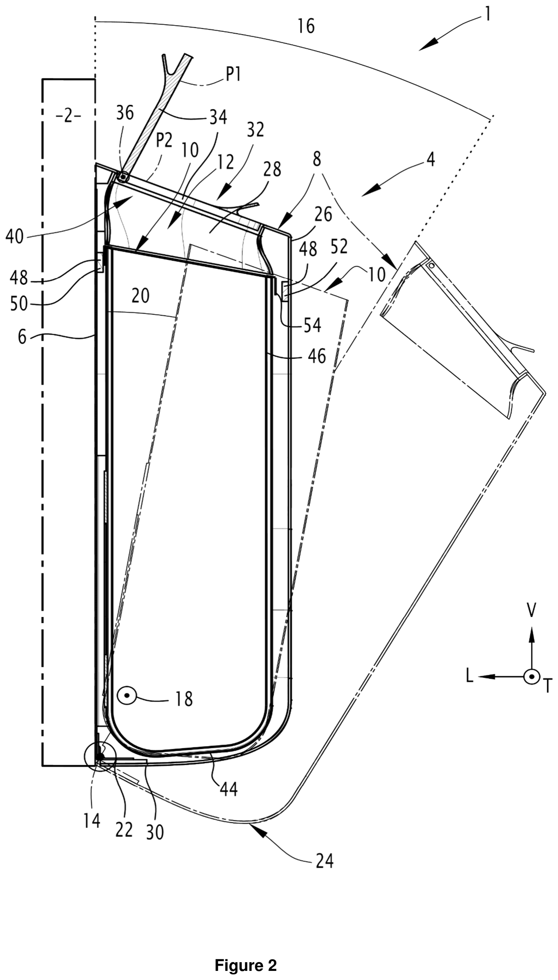

Sur les figures 1 et 2 est représentée une partie d'un véhicule 1 comprenant une paroi 2 et un conteneur de déchets 4 fixé sur la paroi 2.

Le véhicule 1 est par exemple un véhicule ferroviaire, un véhicule routier (comme un bus), un véhicule maritime ou un véhicule aérien.

Les termes « sur », « sous », « au-dessus », « en-dessous » sont définis par rapport à une direction verticale V. La direction verticale V est une direction d'élévation du véhicule 1 lorsque le véhicule 1 est disposé sur des rails horizontaux.

Une direction longitudinale L est définie par la direction de circulation du véhicule 1 et une direction transversale T est la direction sensiblement perpendiculaire à la direction longitudinale L et à la direction verticale V. Le repère formé par la direction longitudinale L, la direction transversale T et la direction verticale V est par exemple fixe par rapport à un élément de paroi 6 (décrit ci-dessous). Selon cette mise en œuvre, l'élément de paroi 6 est une portion d'une surface externe de la paroi 2.

La paroi 2 s'étend par exemple dans la direction verticale V et dans une direction parmi la direction longitudinale L et la direction transversale T. Dans l'exemple des figures, la paroi 2 s'étend dans un plan formé par la direction verticale V et la direction transversale T. Cette paroi 2 a une épaisseur selon la direction longitudinale L.

Le conteneur de déchets 4 est configuré pour être actionné entre un état de service dans lequel le conteneur de déchets 4 est configuré pour recevoir des déchets, et un état de maintenance permettant d'enlever les déchets hors du conteneur 4. Sur les figures 1 et 2, des éléments du conteneur de déchets 4 dans l'état de maintenance sont représentés en lignes pointillés, et les éléments du conteneur de déchets 4 dans l'état de service sont représentés en lignes continues. Aussi, pour des raisons de visibilité sur les figures, certaines références sont uniquement représentées pour les éléments dans l'état de service.

Le conteneur de déchets 4 comprend par exemple un élément de paroi 6, un réceptacle 8 et un bac 10. Le réceptacle 8 et l'élément de paroi 6 forment ensemble un espace intérieur 12 lorsque le conteneur de déchets 4 est dans l'état de service. L'espace intérieur 12 est l'espace prévu pour la réception des déchets.

L'élément de paroi 6 est par exemple fixé sur la paroi 2 du véhicule 1. L'élément de paroi 6 s'étend par exemple selon la direction verticale V et selon la direction transversale T, et a une épaisseur selon la direction longitudinale L. Le réceptacle 8 est ici agencé en porte-à-faux par rapport à l'élément de paroi 6. Il en est de même pour le bac 10. Dans l'état de service, le réceptacle 8 et le bac 10 sont sensiblement alignés et orientés dans la direction verticale V.

Le réceptacle 8 est mobile en rotation autour d'un premier axe 14 selon un angle égal à un premier angle de rotation 16 entre l'état de service et l'état de maintenance. Le bac 10 est mobile en rotation autour d'un deuxième axe 18 selon un angle égal à un deuxième angle de rotation 20 entre l'état de service et l'état de maintenance.

Le deuxième angle de rotation 20 est différent du premier angle de rotation 16. Par exemple, la différence entre le premier angle de rotation 16 et le deuxième angle de rotation 20 est comprise entre 20 et 80 degrés, par exemple sensiblement égale à 30 degrés.

Dans l'exemple des figures, le deuxième angle de rotation 20 est inférieur au premier angle de rotation 16. Par exemple, le deuxième angle de rotation 20 est inférieur d'un angle compris entre 20 et 80 degrés, de préférence égal à 30 degrés, par rapport au premier angle de rotation 16.

Le premier axe 14 est par exemple parallèle au deuxième axe 18. Selon un exemple, le premier axe 14 est confondu avec le deuxième axe 18. En variante, le premier axe 14 est non-parallèle au deuxième axe 18.

Par exemple, le premier et/ou le deuxième axe 14, 18 s'étendent selon la direction transversale T.

Le conteneur de déchets 4 comprend en outre par exemple au moins une charnière 22 connectant l'élément de paroi 6 au réceptacle 8. La charnière est en particulier visible sur la figure 2. La charnière 22 comporte un axe définissant le premier axe 14. Selon un exemple, le conteneur de déchets 4 comprend au moins deux charnières 22. Selon une alternative, le conteneur de déchets 4 comprend une seule charnière 22.

Selon un exemple, la charnière 22 présente une butée, non représentée, configurée pour limiter la rotation du réceptacle 8 entre l'état de service et l'état de maintenance.

Le réceptacle 8 comprend une extrémité inférieure 24. Par « extrémité inférieure », il est entendu la partie du réceptacle 8 la plus basse par rapport à la direction verticale V, c'est-à-dire, en d'autres termes, l'extrémité inférieure 24 délimite le fond 30 du réceptacle 8. Notamment, sur les figures, il est représentée l'extrémité inférieure 24 du réceptacle dans l'état de maintenance.

Par exemple, comme visible dans l'exemple des figures, l'extrémité inférieure 24 du réceptacle 8 est, dans l'état de maintenance, agencée en dessous selon la direction verticale V de la même extrémité inférieure 24 dans l'état de service.

Par exemple, la partie la plus basse de du réceptacle 8 dans l'état de maintenance est en dessous de la partie la plus basse du réceptacle 8 dans l'état de service, dans le repère comprenant la direction verticale V.

Ainsi, les déchets, n'ont pas à être soulevés, pour actionner le conteneur de déchets 4 entre l'état de service et l'état de maintenance. Cela permet par exemple de faciliter l'actionnement du conteneur de déchets 4.

Le réceptacle 8 comprend par exemple une partie frontale 26, deux parties latérales 28 reliés par l'intermédiaire de la partie frontale 26 et un fond 30 s'étendant perpendiculairement à la partie frontale 26 et aux deux parties latérales 28. Le réceptacle 8 comprend en outre par exemple une partie supérieure 32 s'étendant notamment perpendiculairement aux parties latérales 28. La partie frontale 26, les deux parties latérales 28, le fond 30 et/ou la partie supérieure 32 sont par exemple formés par des plaques.

Dans l'état de service, le fond 30 s'étend par exemple selon la direction transversale T et selon la direction longitudinale L. Dans l'état de service, la partie frontale 14 et les deux parties latérales 16 s'étendent par exemple chacune selon la direction verticale V et perpendiculairement l'un par rapport à l'autre.

Dans l'état maintenance, le fond 30 du réceptacle 8 est par exemple en dessous selon la direction verticale V à ce même fond 30 dans l'état de service.

Le réceptacle 8 comprend par exemple un couvercle 34 configuré pour tourner autour d'un troisième axe 36 entre une position ouverte P1 et une position fermée P2.

Le troisième axe 36 est par exemple parallèle au premier et/ou deuxième axe 14, 18.

Le réceptacle 8 présente une ouverture 40 pour la réception des déchets. L'ouverture 40 est par exemple couverte par le couvercle 34 dans la position fermée P2. Le couvercle 34 est ainsi configuré pour obturer l'ouverture 40 dans la position fermée.

L'ouverture 40 est par exemple formée dans la partie supérieure 32.

Le bac 10 présente par exemple une ouverture. L'ouverture du bac 10 est plus grande que l'ouverture 40 du réceptacle 8.

L'ouverture 40 présente par exemple une section inférieure par rapport à une section de l'ouverture du bac 10. Cela permet par exemple d'éviter, lorsque des déchets sont jetés par l'ouverture 40, la chute des déchets à côté du bac 10.

Le bac 10 est configuré pour être agencé dans l'espace intérieur 12 dans l'état de service.

Le bac 10 comprend par exemple des parois 42 s'étendant selon la direction verticale V et un fond 44 sensiblement perpendiculaire aux parois 42. Le bac 10 a par exemple la forme d'un seau. Selon un exemple, le bac 10 présente une section rectangulaire ou quadratique dans un plan horizontal, c'est-à-dire dans un plan perpendiculaire à la direction verticale V.

Le conteneur de déchets 4 comprend en outre par exemple un sac 46 inséré au moins partiellement dans le bac 10. Pour les raisons de visibilité, le sac est uniquement représenté sur la figure 2 dans l'état de service.

Le sac 46 est configuré pour recevoir des déchets. Le sac 46 est par exemple un sac poubelle de type connu. Par exemple, le sac 46 présente un volume compris entre 5 et 150 litres, de préférence compris entre 40 et 80 litres. Par exemple, le volume est sensiblement égal à 50 litres.

Le conteneur de déchets 4 comprend par exemple un dispositif de maintien 48 configuré pour exercer, dans l'état de service, une force sur le bac 10 selon une direction perpendiculaire au premier axe 14, c'est-à-dire notamment selon la direction longitudinale L dans l'exemple des figures.

Pour des raisons de visibilité, le dispositif de maintien 48 est uniquement représenté sur la figure 2 dans l'état de service.

Le dispositif de maintien 48 comprend par exemple un élément configuré pour être comprimé entre le bac 10 et le réceptacle 8 dans l'état de service. Par exemple, le dispositif de maintien 48 comprend au moins un ressort, du caoutchouc ou des lamelles. Par « lamelles », il est entendu une pluralité de plaques faisant saillie du réceptacle 8 ou de l'élément de paroi 6.

Le dispositif de maintien 48 est par exemple fixé à l'élément de paroi 6 et/ou au réceptacle 8. Par exemple, le dispositif de maintien 48 comprend une première partie 50 et une deuxième partie 52. La première partie 50 est par exemple fixée à l'élément de paroi 6 et la deuxième partie 52 est par exemple fixée au réceptacle 8, notamment à un côté intérieur de la partie frontale 26 du réceptacle 8.

Le dispositif de maintien 48 est par exemple agencé de telle manière qu'il maintient le bac 10 dans une position prédéfinie dans l'état de service, notamment dans une position dans laquelle le fond 44 du bac 10 s'étend sensiblement perpendiculairement à la direction verticale V.

Le dispositif de maintien 48 permet ainsi de fixer la position du bac 10 par rapport au réceptacle 8 dans l'état de service. Par exemple, lors des mouvements ou des accélérations du véhicule 1 en service, le dispositif de maintien 48 permet d'éviter un déplacement du bac 10 relatif au réceptacle 8.

Par exemple, le dispositif de maintien 48 est configuré pour exercer une force sur le bac 10 par l'intermédiaire d'une partie 54 du sac 46, comme visible dans l'exemple de la figure 2. La partie 54 du sac 46 est une partie du sac qui est repliée sur un côté extérieur du bac 10.

Lorsque le dispositif de maintien 48 exerce une force sur le bac 10 par l'intermédiaire de la partie 54 du sac 46, cela présente deux avantages. D'une part, le bac 10 est fixé par rapport au réceptacle 8 dans une position prédéfinie. D'autre part, le sac 46 est fixé par rapport au bac 10. Le dispositif de maintien 48 permet ainsi d'éviter un glissement du sac 46 dans l'intérieur du bac 10. Aussi, le dispositif de maintien 48 permet d'éviter l'utilisation par exemple d'une sangle pour maintenir le sac 46 en position par rapport au bac 10.

Le conteneur de déchets 4 comprend en outre un dispositif de limitation 56 configuré pour limiter la rotation du bac 10 entre l'état de service et l'état de maintenance une fois que le deuxième angle de rotation 20 est atteint.

Le dispositif de limitation 56 comprend par exemple un pion 58 fixé au bac 10 et une plaque 60 présentant une rainure 62. Le pion 58 est configuré pour se déplacer dans la rainure 62 lorsque le bac 10 tourne autour du deuxième axe 18.

La limitation de la rotation du bac 10 est par exemple indépendante d'une limitation d'une rotation du réceptacle 8. Par exemple, le dispositif de limitation 56 est configuré pour exercer une force uniquement sur le bac 10 lorsqu'il est dans l'état de maintenance.

En complément, le conteneur de déchets 4 comprend en outre un dispositif de limitation de réceptacle, non représenté, configuré pour limiter la rotation du réceptacle 8 entre l'état de service et l'état de maintenance au premier angle de rotation 16. Le dispositif de limitation de réceptacle est par exemple une butée mécanique agencé en dessous du réceptacle 8. Par exemple, la charnière 22 forme le dispositif de limitation de réceptacle.

Selon un autre exemple, le dispositif de limitation de réceptacle est une liaison flexible, par exemple une cordelette, fixé à la paroi 2 et au réceptacle 8.

Le conteneur de déchets 4 comprend par exemple en outre un système de verrouillage 64, configuré pour verrouiller le réceptacle 8 dans l'état de service et en particulier empêcher une rotation du réceptacle 8 autour du premier axe 14. Le système de verrouillage 64 est en outre configuré pour déverrouiller le réceptacle 8 pour un déplacement du réceptacle 8 entre l'état de service et l'état de maintenance, en particulier comme suite l'actionnement du système de verrouillage 64 par une clé dédiée, non représentée, par exemple une clé de Berne.

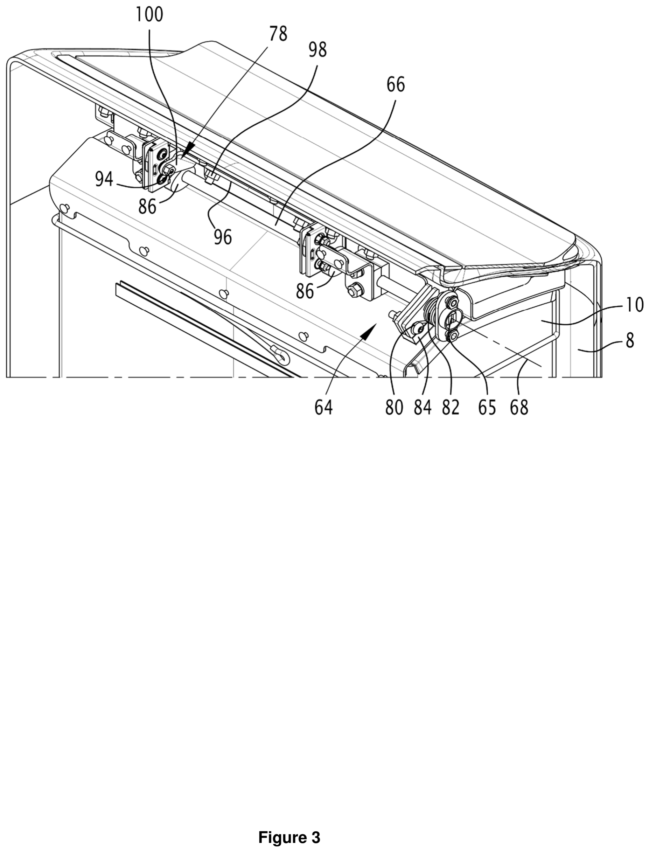

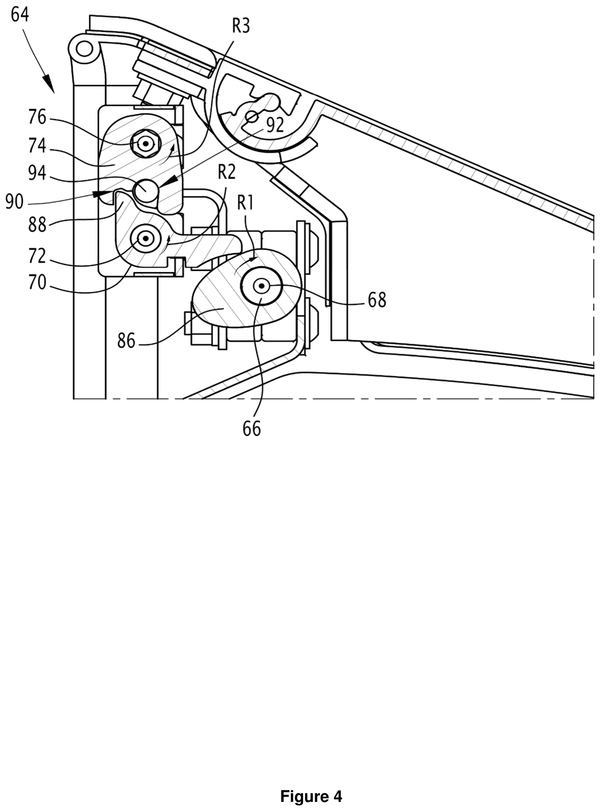

Un exemple du système de verrouillage 64 est visible sur les figures 3 et 4. Dans ces figures, le système de verrouillage 64 est dans une position de verrouillage verrouillant le réceptacle 8 dans l'état de service.

Le système de verrouillage 64 comprend un dispositif d'actionnement 65, un arbre à cames 66 mobile en rotation autour d'un axe de verrouillage primaire 68, au moins un élément de transmission 70, visible en particulier sur la figure 4, mobile autour d'un axe de verrouillage secondaire 72, au moins un élément de verrouillage 74 mobile autour d'un axe de verrouillage tertiaire 76 et une mécanique de maintien 78, visible en particulier sur la figure 3, rigidement fixée au réceptacle 8.

L'axe de verrouillage primaire 68 est en particulier parallèle au premier axe 14 et/ou deuxième axe 18.

Les axes de verrouillage primaire 68, secondaire 72 et tertiaire 76 sont de préférence parallèles l'un par rapport à l'autre.

Le dispositif d'actionnement 65 forme en particulier une extrémité de l'arbre à cames 66, et est configuré pour recevoir la clé dédiée pour l'application d'une force rotative entrainant une rotation de l'arbre à cames 66 autour de l'axe de verrouillage primaire 68 selon une direction de rotation primaire R1, illustrée en particulier sur la figure 4.

L'arbre à cames 66 est par exemple doté d'un dispositif de butée 80 et d'au moins un ressort 82 configuré pour appliquer une force de rotation selon une direction opposée à la direction de rotation primaire R1, en l'absence de la force rotative appliquée via le dispositif d'actionnement 65. Dans ce cas, le ressort 82 force l'arbre à cames 66 dans la position de verrouillage, dans laquelle le dispositif de butée 80 bute contre une butée complémentaire 84.

L'arbre à cames 66 comprend au moins une came 86, par exemple deux cames 86, comme illustré sur la figure 3. La ou chaque came 86 est configurée pour entraîner une rotation de l'élément de transmission 70 respectif lors d'une rotation de l'arbre à cames 66.

L'élément de transmission 70 est configuré pour effectuer une rotation selon une direction de rotation secondaire R2 autour de l'axe de verrouillage secondaire 72 comme suite à l'application d'une force par contact avec la came 86 respective. En l'absence de la force appliquée par la came 86 respective, l'élément de transmission 70 est configuré pour être forcé par un ressort, non représenté, dans la position de verrouillage, dont un exemple est visible sur la figure 4. Ce ressort applique en particulier une force selon une direction opposée à la direction R2.

L'élément de transmission 70 comprend par exemple une saillie 88, en particulier agencée à une extrémité opposée à une partie de l'élément de transmission 70 destinée à entrer en contact avec la came 86 respective.

L'élément de verrouillage 74 est configuré pour effectuer une rotation selon une direction de rotation tertiaire R3 autour de l'axe de verrouillage tertiaire 76 comme suite à l'application d'une force par un ressort, non représenté, en l'absence de verrouillage de l'élément de verrouillage 74 par la saillie 88.

L'élément de verrouillage 74 comprend par exemple une première encoche 90 complémentaire à la saillie 88, et configurée pour recevoir la saillie 88 dans la position de verrouillage, comme visible en particulier sur la figure 4. Lorsque la saillie 88 est reçue dans la première encoche 90, une rotation de l'élément de verrouillage 74 est ainsi empêchée.

L'élément de verrouillage 74 comprend en outre une seconde encoche 92 configurée pour recevoir un pion de verrouillage 94 de la mécanique de maintien 78 pour verrouiller le réceptacle 8 dans l'état de service.

La mécanique de maintien 78 comprend en particulier le ou chaque pion de verrouillage 94 et une plaque 96, visible en particulier sur la figure 3, et fixée au réceptacle 8 par exemple par au moins une vis 98 ou par collage.

Le ou chaque pion 94 s'étend de préférence selon une direction parallèle à l'axe de verrouillage primaire R1.

La plaque 96 comprend, pour le ou chaque pion de verrouillage 94, un flanc 100 agencé pour une fixation du pion de verrouillage 94 dans une position, dans laquelle le pion de verrouillage 94 s'étend selon une direction perpendiculaire à la ou chaque vis 98 fixant la plaque 96 au réceptacle 8.

Un exemple de fonctionnement du conteneur de déchets 4 comprenant le système de verrouillage 64 est maintenant décrit.

Lors d'une rotation de l'arbre à cames 66 par le dispositif d'actionnement 65 selon la direction de rotation primaire R1, l'élément de transmission 70 tourne selon la direction de rotation secondaire R2, et l'élément de verrouillage 74 tourne selon la direction de rotation tertiaire R3.

Plus particulièrement, la ou chaque came 86 transmet une force à l'élément de transmission 70 entraînant ainsi une rotation de l'élément 70 selon la direction de rotation secondaire R2. La saillie 88 quitte la première encoche 90, et l'élément de verrouillage 74 tourne selon la direction de rotation tertiaire R3 par l'application d'une force de ressort, pour arriver dans une position de déverrouillage, non représentée. Le pion de verrouillage 94 est ainsi libéré, ce qui permet au réceptacle 8 de pivoter de l'état de service dans l'état de maintenance.

Un agent enlève ainsi par exemple les déchets, par exemple en retirant un sac 46 ou le bac 10 qui les contient.

Selon un exemple, une fois le pion de verrouillage 94 ayant quitté la seconde encoche 92, l'agent relâche la force appliquée via dispositif d'actionnement 65 à l'arbre à cames 66. Le ressort 82 entraîne une rotation de l'arbre à cames 66 selon une direction opposée à la direction de rotation primaire R1, et le dispositif de butée 80 bute contre la butée complémentaire 84. En particulier, aucune force de rotation n'est plus appliquée de la ou chaque came 86 à l'élément de transmission 70.

De préférence, l'élément de verrouillage 74 reste dans la position de déverrouillage dans l'état de maintenance, c'est-à-dire en particulier dans une position tournée selon la direction R3 par rapport à la position de l'élément de verrouillage 74 sur la figure 4, du fait de l'application d'une force par le ressort non représenté de l'élément de verrouillage 74.

Pour déplacer le conteneur de déchets 4 à partir de l'état de maintenance dans l'état de service, l'agent appuie sur le réceptacle 8 pour effectuer une rotation autour du premier axe 14. Le pion de verrouillage 94 entre dans la seconde encoche 92 de l'élément de verrouillage 74, entraînant ainsi une rotation de l'élément de verrouillage 74, à partir de la position de déverrouillage, en direction opposée par rapport à la direction de rotation tertiaire R3. La saillie 88 entre alors de nouveau dans la première encoche 90, verrouillant ainsi le réceptacle 8 dans l'état de service.

Bien entendu, d'autres mises en œuvre du système de verrouillage 64 peuvent être envisagés.

Selon une variante, le conteneur de déchets 4 est fixé sur une cloison quelconque, autre qu'une cloison d'un véhicule. Par exemple, le conteneur de déchets 4 est fixé sur une cloison d'un bâtiment.

Le conteneur de déchets selon l'invention présente de nombreux avantages.

Notamment le fait que le deuxième angle de rotation 20 est différent du premier angle de rotation 16 permet d'améliorer l'ergonomie d'utilisation, notamment lors de l'enlèvement des déchets.

Par exemple, pour enlever les déchets, l'agent enlève le bac 10 ou le sac 46 dans l'état de maintenance. Comme dans l'état de maintenance le bac 10 est à distance par rapport au réceptacle 8 grâce à sa rotation différente par rapport à la rotation du réceptacle 8, il est facile d'enlever les déchets.

Aussi, le conteneur de déchets 4 est ouvert facilement, et par exemple sans devoir soulever le poids des déchets. Aussi, le conteneur de déchets 4 présente une taille réduite grâce à son agencement du bac 10 et du réceptacle 8, ce qui est pratique par exemple lorsque le conteneur de déchets 4 est agencé dans le véhicule 1.

Le système de verrouillage 64 permet d'obtenir un déverrouillage du conteneur de déchets 4 particulièrement simple et rapide, et ainsi d'obtenir un déplacement rapide du conteneur de déchets de l'état de service à l'état de maintenance et vice-versa.

## Revendications

1. Conteneur de déchets (4) configuré pour être actionné entre un état de service dans lequel le conteneur de déchets (4) est configuré pour recevoir des déchets, et un état de maintenance permettant d'enlever les déchets reçus par le conteneur de déchets (4), le conteneur de déchets (4) comprenant :
- un réceptacle (8) et un élément de paroi (6) définissant ensemble un espace intérieur (12) lorsque le conteneur de déchets (4) est dans l'état de service ;
- un bac (10) configuré pour être agencé dans l'espace intérieur (12),
le réceptacle (8) étant mobile en rotation autour d'un premier axe (14) selon un angle égal à un premier angle de rotation (16) entre l'état de service et l'état de maintenance,
le bac (10) étant mobile en rotation autour d'un deuxième axe (18) selon un angle égal à un deuxième angle de rotation (20) entre l'état de service et l'état de maintenance, le deuxième angle de rotation (20) étant différent du premier angle de rotation (16), le premier axe (14) étant de préférence parallèle au deuxième axe (18).

2. Conteneur de déchets (4) selon la revendication 1, comprenant au moins une charnière (22) connectant l'élément de paroi (6) au réceptacle (8), la charnière (22) ayant un axe définissant le premier axe (14).

3. Conteneur de déchets (4) selon l'une quelconque des revendications 1 à 2, comprenant en outre un système de verrouillage (64), configuré pour verrouiller le réceptacle (8) dans l'état de service, et configuré pour déverrouiller le réceptacle (8) pour un déplacement du réceptacle (8) entre l'état de service et l'état de maintenance.

4. Conteneur de déchets (4) selon la revendication 3, dans lequel le système de verrouillage (64) comprend un arbre à cames (66) mobile en rotation autour d'un axe de verrouillage primaire (68), et au moins un élément de verrouillage (74) mobile en rotation autour d'un axe (76) parallèle à l'axe de verrouillage primaire (68), l'élément de verrouillage (74) étant configuré pour verrouiller le réceptacle (8) dans l'état de service, et pour déverrouiller le réceptacle (8) lors d'une rotation de l'arbre à cames (66).

5. Conteneur de déchets (4) selon la revendication 4, dans lequel le système de verrouillage (64) comprend en outre un élément de transmission (70) mobile en rotation, l'élément de transmission (70) étant configuré pour verrouiller l'élément de verrouillage (74) dans une position de verrouillage, l'élément de transmission (70) étant configuré pour déverrouiller l'élément de verrouillage (74) par une rotation de l'élément de transmission (70) entrainée par la rotation de l'arbre à cames (66).

6. Conteneur de déchets (4) selon la revendication 4 ou la revendication 5, dans lequel le système de verrouillage (64) comprend en outre une mécanique de maintien (78) fixée au réceptacle (8) et comprenant au moins un pion de verrouillage (94) configuré pour être reçu dans une encoche (92) de l'élément de verrouillage (74) pour verrouiller le réceptacle (8) dans l'état de service, le ou chaque pion de verrouillage (94) s'étendant de préférence selon une direction parallèle à l'axe de verrouillage primaire (68).

7. Conteneur de déchets (4) selon l'une quelconque des revendications précédentes, comprenant un sac (46) inséré au moins partiellement dans le bac (10) et un dispositif de maintien (48) configuré pour exercer, dans l'état de service, une force sur le bac (10) selon une direction perpendiculaire au premier axe (14), le dispositif de maintien (48) étant de préférence configuré pour exercer la force sur le bac (10) par l'intermédiaire d'une partie (54) du sac (46).

8. Conteneur de déchets (4) selon l'une quelconque des revendications précédentes, comprenant un dispositif de limitation (56) configuré pour limiter la rotation du bac (10) entre l'état de service et l'état de maintenance une fois que le deuxième angle de rotation (20) est atteint, de préférence le dispositif de limitation (56) comprenant un pion (58) fixé au bac (10) et une plaque (60) présentant une rainure (62), le pion (58) étant configuré pour se déplacer dans la rainure (62) lorsque le bac (10) tourne autour du deuxième axe (18).

9. Conteneur de déchets (4) selon l'une quelconque des revendications précédentes, comprenant en outre un dispositif de limitation de réceptacle configuré pour limiter la rotation du réceptacle (8) entre l'état de service et l'état de maintenance.

10. Conteneur de déchets (4) selon l'une quelconque des revendications précédentes, dans lequel l'élément de paroi (6) est une portion de surface externe de la paroi (2).

11. Conteneur de déchets (4) selon l'une quelconque des revendications précédentes, dans lequel le réceptacle (8) est agencé en porte-à-faux par rapport à la paroi (2).

12. Conteneur de déchets (4) selon l'une quelconque des revendications précédentes, dans lequel le réceptacle (10) et le bac (8) sont sensiblement alignés dans l'état de service.

13. Conteneur de déchets (4) selon l'une quelconque des revendications précédentes, dans lequel le réceptacle (10) et/ou le bac (8) sont orientés sensiblement verticalement dans l'état de service.

14. Véhicule (1) comprenant un conteneur de déchets (4) selon l'une quelconque des revendications précédentes.
